# EUROPEAN PATENT APPLICATION

(11) **EP 2 400 329 A1**
(43) Date of publication of application: **28.12.2011**
(21) Application number: 11170543.0
(22) Date of filing: 20.06.2011
(51) Int. Cl.: G02B 6/44, H02G 3/08

(54) **Apparatus for handling data conductors**

(30) Priority: 22.06.2010 DE 202010009385 U
(71) Applicant: CCS Technology, Inc., Wilmington, DE 19803 (US)
(72) Inventor: Matthies, Jürgen, Dipl.-Ing., 58300 Wetter (DE); Fabrykowski, Grzegorz, Dipl.-Ing., 95-010 Gmina Strykow (PL)
(74) Representative: Sturm, Christoph

(57) **Abstract**

Apparatus for handling data conductors, in particular optical waveguides, and junction points between data conductors, in particular between optical waveguides, having a housing (11) and having assemblies, which are accommodated in the housing (11), for connecting and/or laying data conductors, it being possible for the housing (11) to be fastened to a supporting structure, in particular to a supporting element which is associated with a housing wall or a flush-mounted box which is associated with the housing wall, by means of a rear wall (21) of the said housing by fastening elements, in particular fastening screws, extending into the supporting structure through mounting openings which are made in the rear wall (21) of the housing, comprising at least two slot-like mounting openings, with a first slot-like mounting opening (23) being horizontally oriented in the mounting position of the housing and a second slot-like mounting opening (24) being vertically oriented in the mounting position of the housing.

## Description

The present invention relates to an apparatus for handling data conductors, in particular optical waveguides, and junction points between data conductors, in particular between optical waveguides, according to the preamble of Claim 1.

When designing, for example, optical waveguide cable networks, apparatuses for handling optical waveguides and junction points between optical waveguides are required to ensure structured wiring. One requirement made of such apparatuses is maximum population of said apparatuses together with a high packing density and simultaneous, lower mechanical stress on the optical waveguides. Similar requirements are made in the case of designing networks comprising copper conductors or other data conductors.

The product catalogue "Zubehör für LWL-Kabelnetze [Accessories for optical waveguide cable networks], pages 182-187, edition 1, Corning Cable Systems GmbH & Co KG, year 2001" has already disclosed an apparatus, which is in the form of a wall-mounted distribution device, for handling optical waveguides and junction points between optical waveguides, the said apparatus comprising a housing and assemblies, which are accommodated in the housing, for connecting and/or laying data conductors, it being possible for the housing to be fastened to a supporting structure, in particular to a supporting element which is associated with a housing wall, by means of a rear wall of the said housing by fastening elements, in particular fastening screws, extending into the supporting structure through mounting openings which are made in the rear wall of the housing.
However, to date, these mounting openings do not allow any tolerance compensation between the housing and supporting structure.

Taking this as a starting point, the present invention is based on the problem of providing a novel apparatus for handling data conductors and junction points between data conductors.

This problem is solved by an apparatus having the features of claim 1.

According to the invention, at least two slot-like mounting openings are present, with a first slot-like mounting opening being horizontally oriented in the mounting position of the housing and a second slot-like mounting opening being vertically oriented in the mounting position of the housing.

On account of the first, slot-like mounting opening being horizontally oriented in the mounting position of the housing and the second, slot-like mounting opening being vertically oriented in the mounting position of the housing, tolerance compensation is possible when the apparatus according to the invention is mounted on or fastened to a supporting structure.

It is therefore possible, when openings in the supporting structure which serve to accommodate the fastening elements are not exactly oriented, for the apparatus according to the invention to nevertheless be fastened to the supporting structure with exact, vertical and/or horizontal orientation.

Furthermore, varying distances between the openings in the supporting structure are compensated for.

At least four slot-like mounting openings are preferably present, with the first slot-like mounting opening and a third slot-like mounting opening in each case being horizontally oriented in the respective mounting position of the housing, and the second slot-like mounting opening and a fourth slot-like mounting opening in each case being vertically oriented in the respective mounting position of the housing. When at least four slot-like mounting openings are present, the apparatus according to the invention can be fastened to the supporting structure with tolerance compensation in each case in relative positions which are tilted through 90° in relation to one another.

According to one advantageous development of the invention, the mounting openings are oriented in relation to one another in such a way that the said mounting openings are positioned on an imaginary circular path in such a way that the first slot-like mounting opening and the second slot-like mounting opening and also the third slot-like mounting opening and the fourth slot-like mounting opening are respectively offset through approximately 180° in relation to one another, and that the first slot-like mounting opening and the third slot-like mounting opening and also the second slot-like mounting opening and the fourth slot-like mounting opening are respectively offset through approximately 90° in relation to one another, with an imaginary extension of the second mounting opening, which is vertically oriented in the respective mounting position of the housing, intersecting the first mounting opening which is horizontally oriented in the respective mounting position of the housing, and an imaginary extension of the fourth mounting opening, which is vertically oriented in the respective mounting position of the housing, intersecting the third mounting opening which is horizontally oriented in the respective mounting position of the housing.

Preferred developments of the invention can be gathered from the dependent claims and the following description. An exemplary embodiment is explained in greater detail with reference to the drawing, in which:
- Fig. 1:: shows a perspective view of an apparatus according to the invention, which is in the form of a wall-mounted distribution device, for handling data conductors and junction points between data conductors, together with data conductors which are inserted via a side wall of the apparatus into said apparatus by means of data cables and plug-type connectors;
- Fig. 2:: shows a perspective view of a housing lower part of the apparatus according to the invention from Fig. 1 without the cables and plug-type connectors but together with a flush-mounted box on which the apparatus according to the invention can be fastened;
- Fig. 3:: shows a perspective view of the arrangement of Fig. 2 in a state in which the housing lower part is fastened on the one flush-mounted box;
- Fig. 4:: shows a plan view of the arrangement from Fig. 3;
- Fig. 5:: shows a perspective view of the arrangement from Fig. 2 in a state in which the housing lower part is tilted through 90° in relation to the flush-mounted box; and
- Fig. 6:: shows a perspective view of a housing lower part of the apparatus according to the invention from Fig. 1 without the cables and plug-type connectors but together with a supporting plate on which the apparatus according to the invention can be fastened.

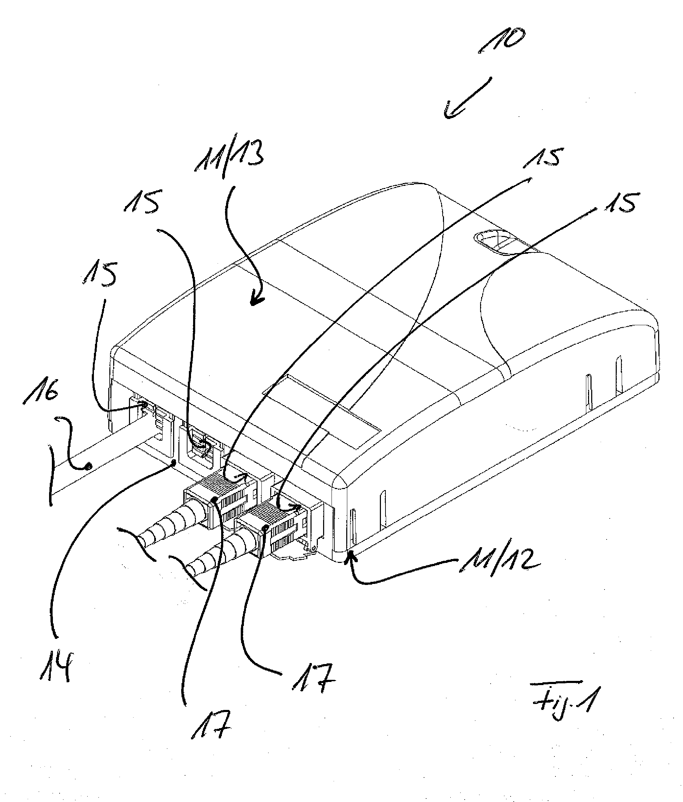

The invention relates to an apparatus for handling data conductors, in particular for handling optical waveguides, and junction points between data conductors, in particular junction points between optical waveguides. The invention will be described in detail below with reference to Figs 1 to 6, specifically with reference to an apparatus 10 according to the invention, which is in the form of a wall-mounted distribution device, for handling data conductors and junction points between data conductors.

The apparatus 10 according to the invention has a housing 11 comprising a first housing part 12 and a scond housing part 13, with the first housing part 12 and the second housing part 13 of the housing 11 of the apparatus 10 according to the invention defining an interior space of the apparatus 10 according to the invention in the mounted state, assemblies for connecting and/or laying data conductors being accommodated in said interior space. The first housing part 12 is also without limitation to its orientation called housing lower part 12 and the second housing part 13 is also without limitation to its orientation called housing upper part 13.

The assemblies accommodated in the interior space may be, for example, splice cassettes or excess-length storage means for connecting and/or laying data conductors which are in the form of optical waveguides. In Fig. 1, data conductors are inserted into the interior space, which is defined by the housing 11, of the apparatus 10 according to the invention and routed out of the interior space, specifically in accordance with Fig. 1 firstly via cable 16 and secondly via plug-type connectors 17, into the apparatus 10 according to the invention, specifically via a side wall 14 of the housing lower part 12, and to be precise via openings 15 made in the side wall 14 of the housing lower part.

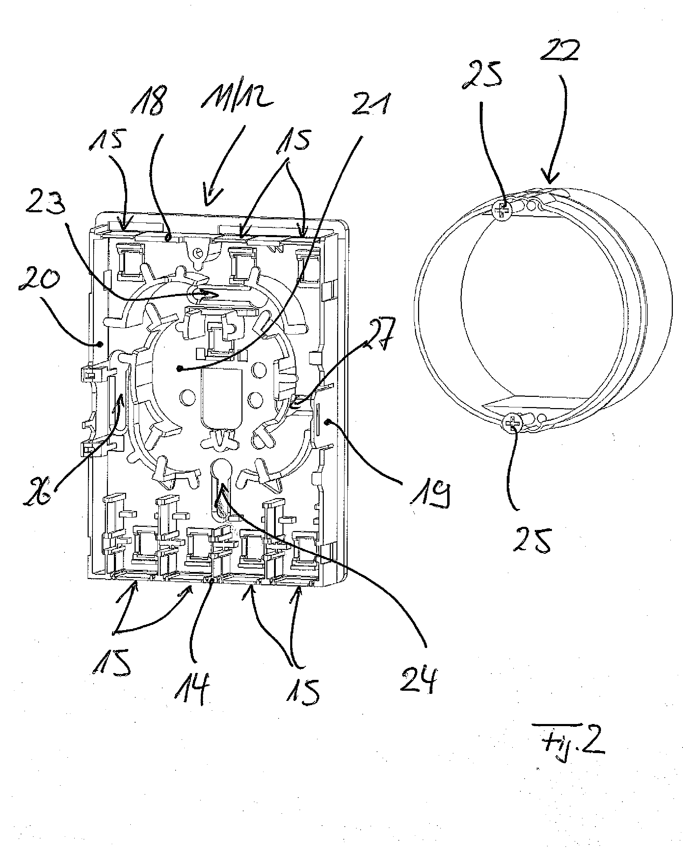

As can be gathered from Fig. 2, these openings 15, via which data conductors can be inserted into and routed out of the apparatus 10, are not only formed in the side wall 14 of the housing lower part 12 but also in a side wall 18 of the housing lower part 12 which is opposite the side wall 14. In the exemplary embodiment shown, these two side walls 14 and 18 of the housing lower part 12, in which side walls the openings 15 are made, are designed as relatively short side walls of the housing lower part 12, with no such openings 15 being made in the relatively long side walls 19 and 20 of the housing lower part 12, the said relatively long side walls running between the relatively short side walls 14 and 18.

In the exemplary embodiment shown, the apparatus 10 according to the invention is designed to handle data conductors and junction points between data conductors in the form of wall-mounted distribution devices which can be fastened to a supporting element, which is associated with a housing wall, or to a supporting structure via the housing 11, specifically via a rear wall 21 of the housing lower part 12.

Therefore, Fig. 2 shows an exploded illustration of the housing lower part 12 of the housing 11 of the apparatus 10 according to the invention together with a supporting element which is in the form of a flush-mounted box 22.

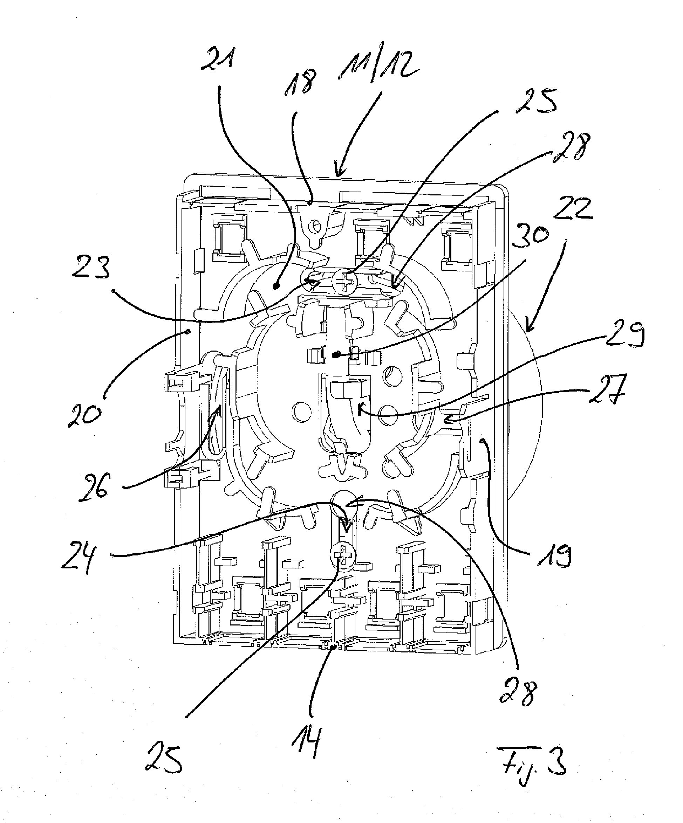

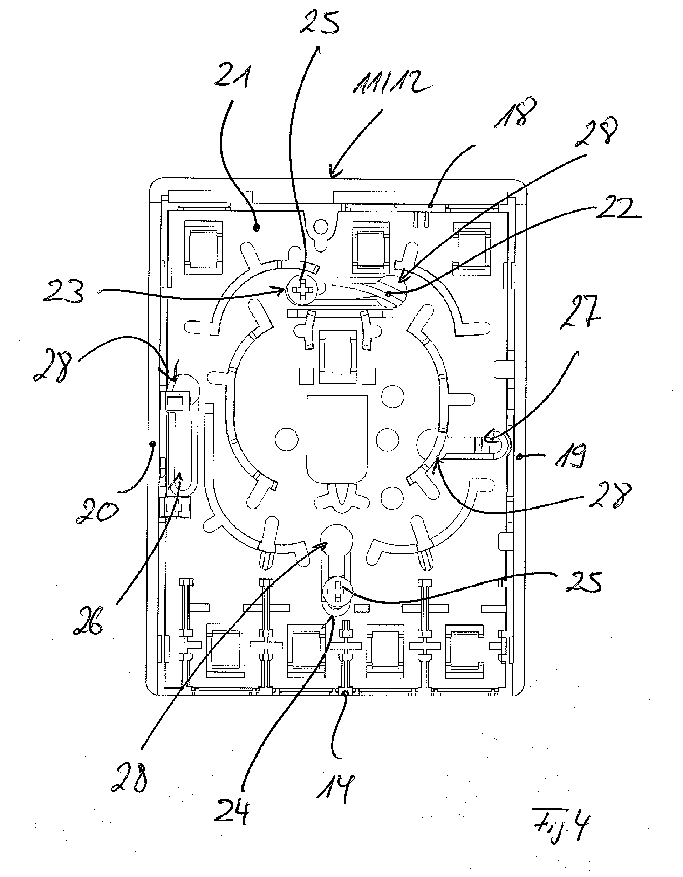

In Figs 3 and 4, the housing lower part 12 of the housing 11 of the apparatus 10 according to the invention is mounted on or fastened to the supporting element in the form of a flush-mounted box 22 via the rear wall 21 of the housing lower part 12.

In this case, in Figs 3 and 4, the housing lower part 12 of the housing 11 of the apparatus 10 according to the invention is fastened to the supporting structure, which is designed as a flush-mounted box 22, in such a way that the side walls 14 and 18 of the housing lower part 12 of the housing 11 extend substantially in the horizontal direction and the side walls 19 and 20 of the housing lower part 12 of the housing 11 extend substantially in the vertical direction.

In order to mount or fasten the housing 11, specifically the housing lower part 12, of the apparatus 10 according to the invention on or to the supporting structure, specifically on or to the supporting structure which is in the form of a flush-mounted box 22 in Figs 2 to 4, at least two slot-like mounting openings, specifically a first, slot-like mounting opening 23 which is horizontally oriented in the mounting position of the housing 11, and a second, slot-like mounting opening 24 which is vertically oriented in the mounting position, are made in the rear wall 21 of the housing lower part 12. In this case, an imaginary extension of the second mounting opening 24 which is vertically oriented in the mounting position intersects the first mounting opening 23 which is horizontally oriented in the mounting position. In the mounted state (see Figs 3 and 4), fastening elements 25 which are in the form of fastening screws and extend into the supporting structure which is in the form of a flush-mounted box 22, specifically into corresponding openings in said supporting structure for accommodating the fastening elements 25, extend through these two mounting openings 23 and 24.

On account of the above configuration of the slot-like mounting openings 23 and 24, a deviation in the diameter of the flush-mounted box 22 can be compensated for when the housing lower part 12 of the housing 11 is mounted on the supporting structure which is in the form of a flush-mounted box 22, specifically by the position of the fastening element 25 in the slot-like mounting opening 24 which is vertically oriented in the mounting position of the housing 11 varying as a function of the diameter of the flush-mounted box 22. Furthermore, when the flush-mounted box 22 is not mounted in the exact circumferential position in a housing wall, the housing 11 of the apparatus 10 according to the invention can nevertheless be locked with the exact vertical and horizontal orientation, specifically in such a way that the fastening element 25 which engages in the mounting opening 24 which is vertically oriented in the mounting position defines a pivot axis about which the housing lower part 12 can be tilted, with the fastening element 25 which engages in the mounting opening 23 which is horizontally oriented in the mounting position changing its relative position in this horizontally oriented mounting opening 23 as a function of the tilting position.

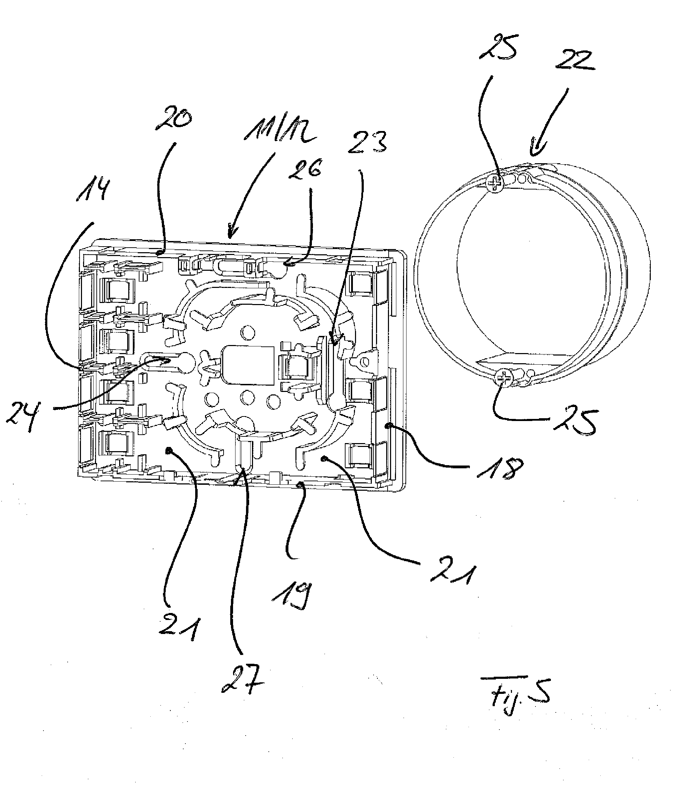

In order to be able to fasten the housing 11 of the apparatus 10 according to the invention to the supporting structure, which is in the form of a flush-mounted box 22, not only in the relative position shown in Figs 3 and 4 but rather also in a manner tilted through 90° in the relative position shown in Fig. 5, further slot-like mounting openings can be made in the rear wall 21 of the housing lower part 12 in addition to the two above-mentioned slot-like mounting openings 23 and 24, specifically a third, slot-like mounting opening 26 which, like the first, slot-like mounting opening 23, is horizontally oriented in the respective mounting position of the housing 11, and a fourth, slot-like mounting opening 27 which, like the second, slot-like mounting opening 24, is vertically oriented in the respective mounting position of the housing 11.

As can be gathered from Fig. 5, an imaginary extension of the fourth mounting opening 27 which is vertically oriented in the mounting position of the housing lower part 12 in this case intersects the third mounting opening 26 which is horizontally oriented in the mounting position of the housing lower part 12.

When the housing lower part 12 is fastened on the flush-mounted box 22 in the relative position shown in Fig. 5, the side walls 14 and 18 of the housing lower part 12, in which walls the openings 15 are made, extend in the vertical direction, whereas the side walls 19 and 20 of the housing lower part 12 extend in the horizontal direction.

In the relative position of the housing lower part 12 shown in Fig. 5, due to the configuration of the slot-like mounting openings 26 and 27, firstly a tolerance in the diameter of the flush-mounted box 22 and secondly a tolerance in the circumferential position of the flush-mounted box 22 can be compensated for in such a way that the housing 11 can always be mounted with the exact vertical and horizontal orientation.

As can best be gathered from Fig. 4, the four slot-like mounting openings 23, 24, 26 and 27 are positioned on or along an imaginary circular path, specifically in such a way that the first, slot-like mounting opening 23 and the second, slot-like mounting opening 24, and also the third, slot-like mounting opening 26 and the forth, slot-like mounting opening 27, are respectively offset through 180° in relation to one another. Accordingly, the first, slot-like mounting opening 23 and the second, slot-like mounting opening 24, and also the third, slot-like mounting opening 26 and the fourth, slot-like mounting opening 27, lie approximately diametrically opposite one another relative to an imaginary centre point of the imaginary circular path, with the longitudinal extent of the approximately diametrically opposite mounting openings 23 and 24 and, respectively, 26 and 27 being offset through 90° in relation to one another.

It can also be gathered from Fig. 4 that the mounting openings 23, 24, 26 and 27 are oriented in relation to one another on the imaginary circular path in such a way that the first, slot-like mounting opening 23 and the third, slot-like mounting opening 26, which are each horizontally oriented in the respective mounting position of the housing lower part 12, are offset through approximately 90°, as are the second, slot-like mounting opening 24 and the fourth, slot-like mounting opening 27 which are each vertically oriented in the respective mounting position of the housing lower part 12.

Furthermore, the first, slot-like mounting opening 23 and the fourth, slot-like mounting opening 27, and the second slot-like mounting opening 24 and the third, slot-like mounting opening 26, are in each case offset through 90° in relation to one another along the imaginary circular path.

In order to further simplify mounting of the housing 11, specifically of the housing lower part 12, of the apparatus 10 according to the invention onto the supporting structure which is in the form of a flush-mounted box 22, each of the slot-like mounting openings 23, 24, 26 and 27 comprises a widened portion 28 at one end.

The dimensions of the widened portions 18 are greater than the dimensions of a fastening head of the fastening elements 25 which are in the form of fastening screws, and therefore the fastening elements 25 can further remain mounted on the supporting structure in order to mount the housing lower part 12 on the supporting structure which is in the form of a flush-mounted box. The fastening heads of the fastening screws 25 are threaded into the slot-like mounting openings via the widened portions 28. Proceeding from these widened portions 28 of the slot-like mounting openings 23, 24, 26 and 27, said mounting openings constrict in the direction of an opposite end of said mounting openings, it being impossible for the fastening head of a fastening element 25 to be moved or routed out of the mounting opening in the constricted region of the respective slot-like mounting openings 23, 24, 26 and 27. In the mounting position of the housing lower part 12 of the housing 11 of the apparatus 10 according to the invention, that end of the mounting opening 24 or 27, which is vertically oriented in the mounting position, at which the widened portion 28 for threading-in the fastening head of the fastening screw 25 is formed, is positioned closer to the mounting opening 23 or 26 which is horizontally oriented in the mounting position than that end, which is constricted in relation to the widened portion 28, of the mounting opening 24 or 27 which is vertically oriented in the mounting position.

It can be gathered from Fig. 3 that a cable 30 which is routed via the flush-mounted box 22 in the direction of the apparatus 10 according to the invention can be inserted into the housing 11 via an opening 29 which is positioned approximately in the centre between the mounting openings 23, 24, 26 and 27.

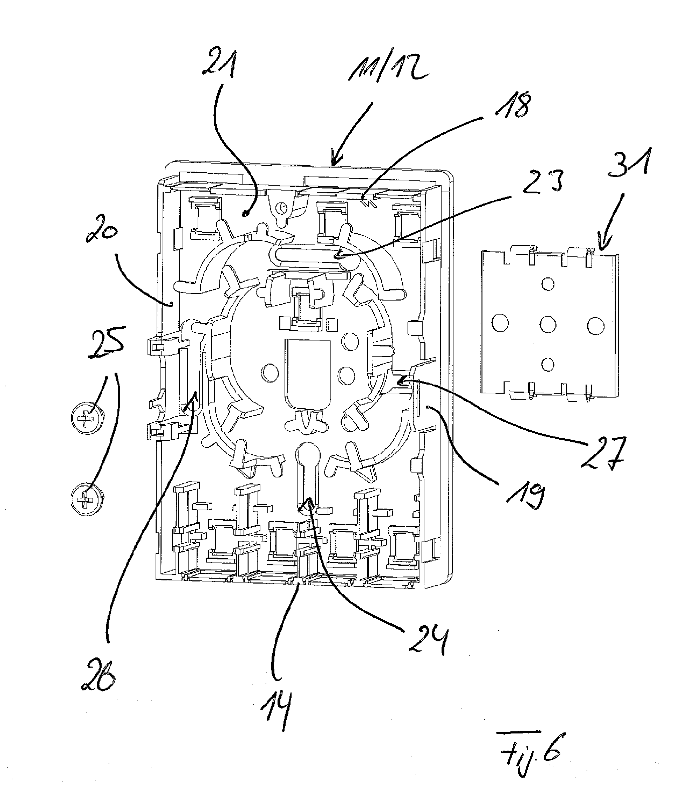

Figure 6 shows an exploded illustration of the housing lower part 12 of the housing 11 of the apparatus 10 according to the invention, together with a supporting structure which is in the form of a supporting plate 31, and also with fastening screws 25.

The housing lower part 12 and therefore the housing 11 of the apparatus 10 according to the invention can also be fastened or mounted on the supporting plate 31 in the manner already described in connection with the flush-mounted box 22.

The mounting openings 23 and 26 which are horizontally oriented in the respective mounting position can, like in the exemplary embodiments shown, each run in a rectilinear manner or alternatively also be contoured in the manner of a segment of an arc. The mounting opening 24 or 27 which is vertically oriented in the respective mounting position preferably runs in a rectilinear manner in each case.

### List of reference symbols

- 10: Apparatus
- 11: Housing
- 12: Housing part
- 13: Housing part
- 14: Side wall
- 15: Opening
- 16: Cable
- 17: Plug-type connector
- 18: Side wall
- 19: Side wall
- 20: Side wall
- 21: Rear wall
- 22: Supporting structure/flush-mounted box
- 23: Mounting opening
- 24: Mounting opening
- 25: Fastening element
- 26: Mounting opening
- 27: Mounting opening
- 28: Widened portion
- 29: Recess
- 30: Cable
- 31: Supporting structure/supporting plate

## Claims

1. Apparatus for handling data conductors, in particular optical waveguides, and junction points between data conductors, in particular between optical waveguides, having a housing (11) and having assemblies, which are accommodated in the housing (11), for connecting and/or laying data conductors, it being possible for the housing (11) to be fastened to a supporting structure, in particular to a supporting element which is associated with a housing wall or a flush-mounted box which is associated with the housing wall, by means of a rear wall (21) of the said housing by fastening elements, in particular fastening screws, extending into the supporting structure through mounting openings which are made in the rear wall (21) of the housing, **characterized by** at least two slot-like mounting openings, with a first slot-like mounting opening (23) being horizontally oriented in the mounting position of the housing and a second slot-like mounting opening (24) being vertically oriented in the mounting position of the housing.

2. Apparatus according to Claim 1, **characterized in that** an imaginary extension of the second mounting opening (24), which is vertically oriented in the mounting position of the housing, intersects the first mounting opening (23) which is horizontally oriented in the mounting position of the housing.

3. Apparatus according to Claim 1 or 2, **characterized by** at least four slot-like mounting openings, with the first slot-like mounting opening (23) and a third slot-like mounting opening (26) in each case being horizontally oriented in the respective mounting position of the housing, and the second slot-like mounting opening (24) and a fourth slot-like mounting opening (27) in each case being vertically oriented in the respective mounting position of the housing.

4. Apparatus according to Claim 3, **characterized in that** an imaginary extension of the fourth, vertically oriented mounting opening (27) intersects the third, horizontally oriented mounting opening (26).

5. Apparatus according to Claim 3 or 4, **characterized in that** the mounting openings (23, 24, 26, 27) are oriented in relation to one another in such a way that the said mounting openings are positioned on an imaginary circular path in such a way that the first slot-like mounting opening (23) and the second slot-like mounting opening (24), and also the third slot-like mounting opening (26) and the fourth slot-like mounting opening (27), are respectively offset through approximately 180° in relation to one another.

6. Apparatus according to Claim 5, **characterized in that** the mounting openings are oriented in relation to one another in such a way that the first mounting opening (23) and the third mounting opening (26) and also the second mounting opening (24) and the fourth mounting opening (27) are respectively offset through approximately 90° in relation to one another.

7. Apparatus according to Claim 5 or 6, **characterized in that** the mounting openings are oriented in relation to one another in such a way that the first mounting opening (23) and the fourth mounting opening (27), and also the second mounting opening (24) and the third mounting opening (26), are respectively offset through approximately 90° in relation to one another.

8. Apparatus according to one of Claims 1 to 7, **characterized in that** each slot-like mounting opening has, at one end, a widened portion (28) for inserting a fastening head of a fastening element (25) into the respective mounting opening, with, starting from this end which exhibits the widened portion (28), the respective slot-like mounting opening constricting so that the fastening head cannot be routed out of the mounting opening in the constricted region of the respective slot-like mounting opening.

9. Apparatus according to one of Claims 1 to 8, **characterized in that**, for the purpose of mounting said apparatus on the supporting structure, a fastening element (25) extends in each case through a slot-like mounting opening (23, 26) which is horizontally oriented in the mounting position of the housing and a slot-like mounting opening (24, 27) which is vertically oriented in the mounting position of the housing.
